# EUROPEAN PATENT APPLICATION

(11) **EP 0 661 638 A1**
(43) Date of publication of application: **05.07.1995**
(21) Application number: 94119721.2
(22) Date of filing: 14.12.1994
(51) Int. Cl.: G06F 12/08

(54) **Method and apparatus for transferring data in a computer**

(30) Priority: 28.12.1993 US 174547
(71) Applicant: International Business Machines Corporation, Armonk, N.Y. 10504 (US)
(72) Inventor: Chan, Fu Lam, Boynton Beach, Florida 33437 (US); Genduso, Thomas Basilio, West Palm Beach, Florida 33414 (US); Lenta, Eduardo Jorge, Boca Raton, Florida 33486 (US)
(74) Representative: Burt, Roger James, Dr.

(57) **Abstract**

In a computer with a local bus (34) connecting a processor (32) to a main memory (36), a cache memory (37) is connected to the local bus (34) and to the main memory (36). All data that is written onto the local bus (34) by the processor (32) is written to the cache memory (37). Thus, all write hits (the cache memory (37) has the address of the data) and all write misses (the cache memory (37) does not have the address) are written to the cache memory (37). If a write miss is to be written to a data entry in the cache memory (37) which contains valid data, then the valid data is first written to the main memory (36), then the data on the local bus (34) is written to the freed cache memory (37) data entry. In addition, partial writes by the processor (32) on the local bus (34) are written to the cache memory (37) and not to the main memory (36), useful in Error Correction Code (ECC) data schemes.

## Description

The present invention relates to a method and system for transferring data in a computer; in particular it relates to a computer having relatively fast cache memories that are used to increase the operational speed of memory read and write operations.

Personal computer systems in general and IBM personal computers in particular have attained widespread use for providing computer power to many segments of today's modern society. Personal computer systems can usually be defined as a desktop, floor standing, or portable microcomputer that consists of a system unit having a single system processor and associated volatile and non-volatile memory, a display monitor, a keyboard, one or more diskette drives, a fixed disk storage, and an optional printer. One of the distinguishing characteristics of these systems is the use of a motherboard or system planar to connect these components together. These systems are designed primarily to give independent computing power to a single user and are inexpensively priced for purchase by individuals or small businesses. Examples of such personal computer systems are IBM's PERSONAL COMPUTER AT and IBM's PERSONAL SYSTEM/2 Models 25, 30, L40SX, 50, 55, 65, 70, 80, 90 and 95.

These systems can be classified into two general families. The first family, usually referred to as Family I Models, use a bus architecture exemplified by the IBM PERSONAL COMPUTER AT and other so-called "IBM compatible" machines. The second family, referred to as Family II Models, use IBM's MICRO CHANNEL bus architecture exemplified by IBM's PERSONAL SYSTEM/2 Models 50 through 95. In the beginning, the Family I models typically used the popular INTEL 8088 or 8086 microprocessors as the system processor. These processors have the ability to address one megabyte of memory. Later Family I models and the Family II models typically use the higher speed INTEL 80286, 80386, and 80486 microprocessors which can operated in a real mode to emulate the slower speed INTEL 8086 microprocessor or a protected mode which extends the addressing range from 1 megabyte to 4 Gigabytes for some models. In essence, the real mode feature of the 80286, 80386, and 80486 microprocessors provide hardware compatibility with software written for the 8086 and 8088 microprocessors.

Typically, the memory is provided by Dynamic Random Access Memory (DRAM). DRAMs provide a large amount of memory for a small amount of physical space and expense. However, DRAMs suffer from the disadvantage of being slow relative to some processors, such as the 80386 and 80486 microprocessors. As a fast processor reads or writes data to DRAMs over a local bus, it is common for wait states or cycles to occur, wherein other processing and bus operations are suspended until the read or write is complete. Thus, the speed of the processor is limited by the memory.

Use of a faster type of memory, such as Static Random Access Memory (SRAM) would prevent such wait cycles because the memory speed is able to match the speed of the processor. However, SRAMs are expensive.

In order to provide fast memory for fast processors at economical prices, many computers utilize cache memory that is located on the processor integrated circuit chip. Cache memory contains a small amount of SRAM (for example, 8 kilobytes). All data is stored in the main memory, which consists of DRAMs. The cache memory contains a duplicate of some of the data in the DRAMs. Use of cache memory reduces the amount of traffic on the local bus, because many read and write memory operations occur internally within the processor and its cache memory. When the processor reads data, it checks the cache memory first. If the cache memory has the data (referred to as a read hit), then the data is read from the cache memory in order to take advantage of the faster cache speed. If the data is not in the cache memory (referred to as a read miss), then the data is read from the slower DRAMs.

When data is to be written from the processor, the address of the data determines if the data is to be written into the cache memory (referred to as a write hit) or to the main DRAM memory (referred to as a write miss). If the address is located within the cache memory, then a write hit occurs and the data is written to the cache memory. With a write through (or store through) type of cache memory, the data is also written to main memory. With a write back (or store in) type of cache memory, the data is not written to the main memory. However, to prevent the main memory from having stale data, the data in the write back type of cache memory is eventually written back into the main memory. If the address is not within the cache memory, then a write miss occurs and the data is written to the main memory, but not to the cache memory (for both write through and write back type of cache memories).

Thus, for a write through cache memory, all write operations (whether a write hit or a write miss) go to the main memory. For a write back type of cache memory some write operations (namely write miss) go to the main memory. Writing to main memory from the local bus typically requires wait states. As the speed of processors increase, the memory write cycles that leave a processor on the local bus become a significant portion of the local bus traffic due to the large number of wait states incurred. This creates a bandwidth problem and curtails the speed of the processor. The large number of memory write cycles on the local bus can also increase the electrical power used by the main memory, which becomes a significant power drain on battery-operated computers.

In addition, the processor typically performs many partial writes, wherein data is written to main memory in two or more write operations. For example, a 4 byte word may be partially written as follows: 2 bytes are written during a first write operation, with the remaining 2 bytes written during a second write operation. However, computer systems that use Error Correction Codes (ECC) to check the validity of data in memory require all bytes of a data word to generate the code. A Read-Modify-Write procedure is used for partial write operations. For example, if 2 bytes of a 4 byte word are written to the cache memory (which cache memory supports ECC) by the processor, the other 2 bytes must be read from the main DRAM memory. Then, the partial write must be modified to produce a full 4 byte word. Finally the 4 byte word is stored in the cache memory and the correct ECC is generated. These Read-Modify-Write cycles during a partial write require additional processor cycles and create local bus traffic thereby degrading system performance.

The above drawbacks of the prior art are overcome by the invention as claimed.

In accordance with one aspect of the present invention, there is provided a method of and apparatus for transferring data in a computer. The computer includes a processor, a main memory and a local bus connecting the processor to the main memory. A cache memory is connected to the local bus. Data is written on the local bus by the processor. The data has an address, with the address being located in the main memory and being absent from the cache memory. The data on the local bus is written to the cache memory. The data on the local bus is prevented from being written to the main memory.

The cache memory of the present invention complements a processor's internal cache memory. The processor's internal cache memory is referred to as a first level or L1 cache memory. The cache memory of the present invention is referred to as a second level or L2 cache memory. The present invention is particularly useful when the processor's internal cache memory is a write through cache. The L2 cache of the present invention is connected to the local bus. The L2 cache reduces the number of memory cycles by caching all of the data that is written by the processor on the local bus and by allowing the processor to read data that is in the cache memory. The number of write cycles on the local bus is reduced because every write operation by the processor is to the relatively fast L2 cache memory and not to the slower main memory. Because the number of write cycles is reduced, local bus traffic is reduced, enabling the processor to operate at faster speeds. In addition, the power used by the main memory is reduced because the number of read and write operations to the main memory is reduced.

In one aspect of the present invention, the L2 cache memory performs write miss-free operations. The method determines if the data is to be written to a location in the cache memory that is free. If the location is free, then the data on the local bus is written to the free location in the cache memory.

In accordance with another aspect of the present invention, the cache memory provides write miss-valid operations. The method determines if the data is to be written to a location in the cache memory that is free. If the location is not free, because that location contains valid data, then the data in that location is written to main memory before the data on the local bus is written to that location in the cache memory.

The present invention also provides write hit operations, wherein an address of a data word is present in the cache memory and also located in main memory. That data word is written to cache memory.

In another aspect of the present invention,the cache memory provides read hit operations, wherein the processor provides a read request for a data word on the local bus. The address of the data word is present in the cache memory and in the main memory. The data word is provided on the local bus from the cache memory.

In another aspect of the present invention, read miss operations are provided by the cache memory. In a read miss operation, the processor provides on the local bus a read request for a data word having plural bytes, with at least one byte of the data word being located in the cache memory and at least another byte of the data word being located only in main memory. The one byte of the data word located in cache memory is provided to the local bus and the other word in main memory is provided to the local bus.

In still another aspect of the present invention, a method of writing data in a computer (such as to a disk), wherein the data includes a plural number of bytes, is provided. A partial number of the bytes of the data is written on the local bus by the processor. The partial number of bytes on the local bus is written to the cache memory.

The cache memory benefits computers using Error Correction Codes (ECC) during partial write operations. During a partial write operation, a processor writes only a few of the total number of bytes to the local bus. With prior art cache memory ECC schemes, Read-Write-Modify cycles must be performed in order to have all of the bytes of the data word before the data word is written to cache memory. In these prior art schemes, because the processor only provides a partial number of bytes, the remaining number of bytes must be retrieved from main memory, causing wait states and tying up the local bus. With the present invention, the partial number of bytes are written into the cache memory. The remaining number of bytes are located in the cache memory. When the data word is written from the cache memory to main memory, all of the bytes are written in order to fulfill the error correction code scheme. The present invention provides then a cache memory that reduces the frequency of partial write cycles in systems using error correction codes.

Various embodiments of the invention will now be described in detail by way of examples, with reference to accompanying figures, where:
Fig. 1 is a perspective view of a personal computer embodying this invention.
Fig. 2 is an exploded perspective view of certain elements of the personal computer of Fig. 1 including a chassis, a cover, and a planar board and illustrating certain relationships among those elements.
Fig. 3 is a block diagram view of certain components of the personal computer of Figs. 1 and 2, which components include the second level (L2) cache memory of the present invention, in accordance with a preferred embodiment.
Fig. 4 is a block diagram of the memory controller and L2 cache system interfaces.
Fig. 5 is a schematic diagram of the L2 cache organization.
Fig. 6 is a chart illustrating the operation of the L2 cache.
Figs. 7-10 are timing diagrams illustrating various operations of the L2 cache.

While the present invention will be described more fully hereinafter with reference to the accompanying drawings, in which a preferred embodiment of the present invention is shown, it is to be understood at the outset of the description which follows that persons of skill in the appropriate arts may modify the invention here described while still achieving the favorable results of this invention. Accordingly, the description which follows is to be understood as being a broad, teaching disclosure directed to persons of skill in the appropriate arts, and not as limiting upon the present invention.

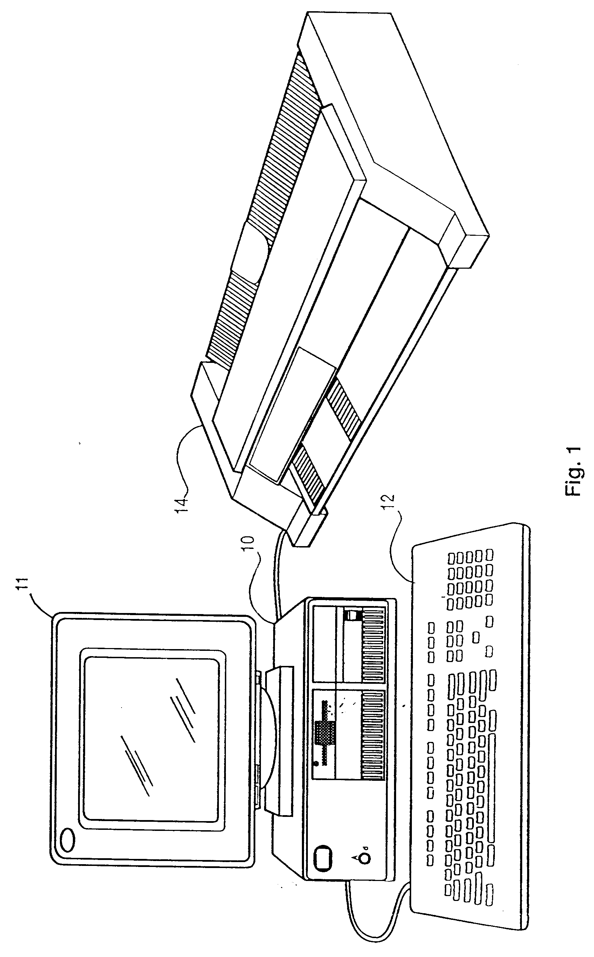

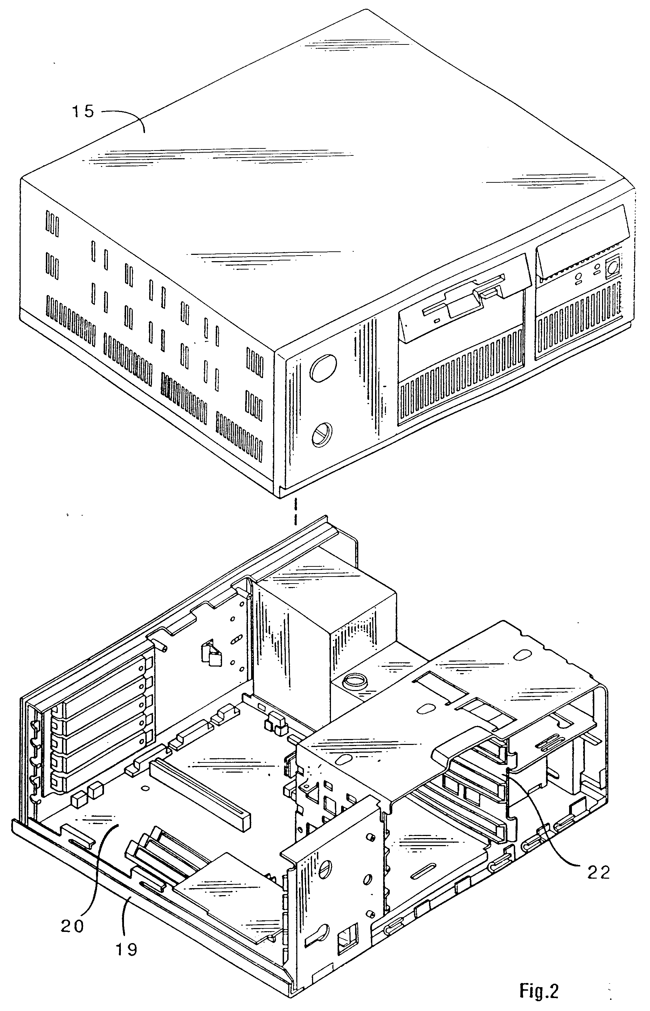

Referring now more particularly to the accompanying drawings, a microcomputer embodying the present invention is there shown and generally indicated at 10 (Fig. 1). The computer 10 may have an associated monitor 11, keyboard 12 and printer or plotter 14. The computer 10 has a cover 15 (see Fig. 2) which cooperates whith a chassis 19 in defining an enclosed, shielded volume for receiving electrically powered data processing and storage components for processing and storing digital data. At least certain of these components are mounted on a multilayer planar 20 or motherboard which is mounted on the chassis 19 and provides a means for electrically interconnecting the components of the computer 10 including those identified above and such other associated elements as floppy disk drives, various forms of direct access storage devices, accessory cards or boards, and the like.

The chassis 19 has a base and a rear panel and defines at least one open bay for receiving a data storage device such as a disk drive for magnetic or optical disks, a tape backup drive, or the like. In the illustrated form, an upper bay 22 is adapted to receive peripheral drives of a first size (such as those known as 3.5 inch drives). A floppy disk drive, a removable media direct access storage device capable of receiving a diskette inserted thereinto and using the diskette to receive, store and deliver data as is generally known, may be provided in the upper bay 22.

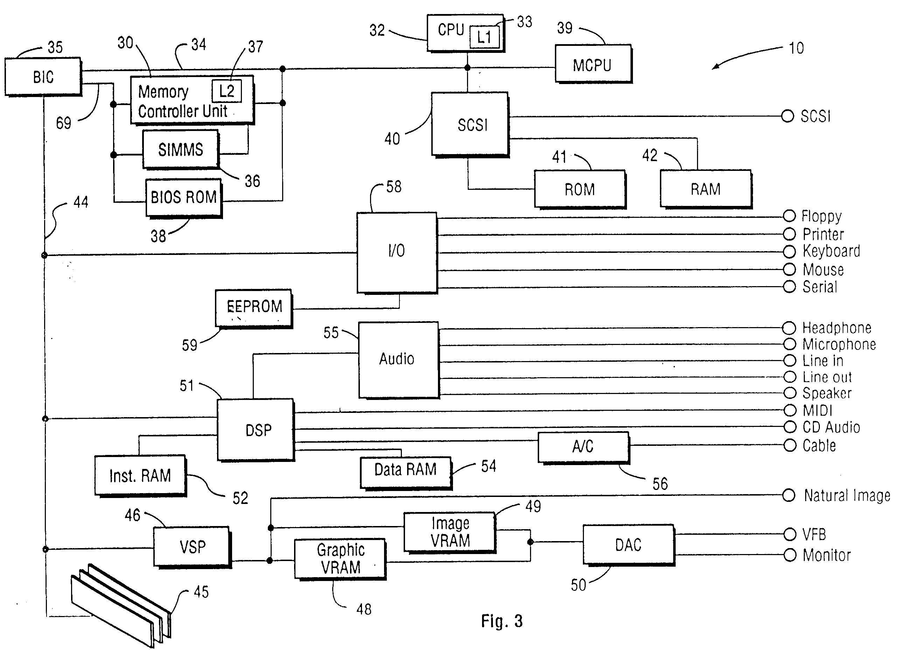

Referring to Fig. 3, there is shown a block diagram of the computer 10 in accordance with the present invention, including components mounted on the planar 20 (shown in Fig. 2) and the connection of the planar to the I/O slots and other hardware of the personal computer system. Connected to the planar is the system Central Processing Unit (CPU) 32. While any appropriate microprocessor can be used as the CPU 32, one suitable microprocessor is the 80486 which is sold by INTEL. The 80486 operational features, such as bus cycle operations, are well known in the art and are described in the Microprocessors, Intel Corporation, 1990, the disclosure of which is incorporated herein by reference. In addition, the disclosure of the 80386 Hardware Reference Manual, Intel Corporation, 1987, is incorporated herein by reference.

The CPU 32 contains cache memory 33, typically in the form of Static Random Access Memory (SRAM). In the preferred embodiment, the cache memory 33 is of the write through (or store through) type and is referred to as a first level cache (L1) to distinguish it from the cache memory 37 of the present invention. The cache memory 37 of the present invention is referred to as a second level cache (L2), and is located within a memory controller unit 30 that is on a CPU local bus 34. Alternatively, the cache memory 37 of the present invention can operate with a first level write back (or store in) cache memory. Further still, the cache memory 37 of the present invention can operate without a first level cache memory 33. Thus, the cache memory 37 of the present invention operates independently of any CPU cache memory.

The CPU 32 is connected by the high speed CPU local bus 34 to a Bus interface Control unit (BIC) 35, to the memory controller unit 30 and to BIOS ROM 38 in which is stored instructions for Basic Input/Output System (BIOS) to the CPU 32. The memory controller unit 30 is in turn connected to volatile Dynamic Random Access Memory (DRAM) 36 here shown as Single Inline Memory Modules (SIMMS). The BIOS ROM 38 includes the BIOS that is used to interface between the I/O devices and the operating system of the CPU 32. Instructions stored in the BIOS ROM 38 can be copied into the SIMMS 36 to decrease the execution time of BIOS.

While the present invention is described hereinafter with particular reference to the system block diagram of Fig. 3, it is to be understood at the outset of the description which follows that it is contemplated that the apparatus and methods in accordance with the present invention may be used with other hardware configurations of the planar board. For example, the system processor could be a PENTIUM microprocessor from Intel. (PENTIUM is a trademark of Intel.)

Returning now to Fig. 3, the CPU local bus 34 (comprising data, address and control components) also provides for the connection of the microprocessor 32 with a numeric or math coprocessor 39 and a Small Computer Systems Interface (SCSI) controller 40. The SCSI controller 40 may, as is known to persons skilled in the art of computer design and operation, be connected or connectable with Read Only Memory (ROM) 41, Random Access Memory (RAM) 42, and suitable external devices of a variety of types as facilitated by the I/O connection indicated to the right in Fig. 3. The SCSI controller 40 functions as a storage controller in controlling storage memory devices such as fixed or removable media electromagnetic storage devices (also known as hard and floppy disk drives), electro-optical, tape and other storage devices.

The Bus Interface Controller (BIC) 35 couples the CPU local bus 34 with an (I/O) bus 44 and functions as a protocol translator, memory controller and DMA controller among other functions. By means of the bus 44, the BIC 35 is coupled with an optional feature bus such as a MICRO CHANNEL bus having a plurality of I/O slots for receiving MICRO CHANNEL adapter cards 45 which may be further connected to an I/O device or memory (not shown). The I/O bus 44 includes address, data, and control components. The I/O bus 44 may be configured to bus specifications other than the MICRO CHANNEL specification.

Coupled along with the I/O bus 44 are a variety of I/O components such as a video signal processor 46 which is associated with video RAM (VRAM) for storing character based information (indicated at 48) and for storing graphic or image based information (indicated at 49). Video signals exchanged with the video signal processor (VSP) 46 may be passed through a Digital-to-Analog Converter (DAC) 50 to a monitor or other display device. Provision is also made for connecting the VSP 46 directly with what is here referred to as a natural image input/output, which may take the form of a video recorder/player, camera, etc. The I/O bus 44 is also coupled with a Digital Signal Processor (DSP) 51 which has associated instruction RAM 52 and data RAM 54 available to store software instructions for the processing of signals by the DSP 51 and data involved in such processing. The DSP 51 provides for processing of audio inputs and outputs by the provision of an audio controller 55, and for handling of other signals by provision of an analog interface controller 56. Lastly, the I/O bus 44 is coupled with an input/output controller 58 with associated Electrical Erasable Programmable Read Only Memory (EEPROM) 59 by which inputs and outputs are exchanged with conventional peripherals including floppy disk drives, a printer or plotter 14, keyboard 12 (shown in Fig. 1), a mouse or pointing device (not shown), and by means of a serial port.

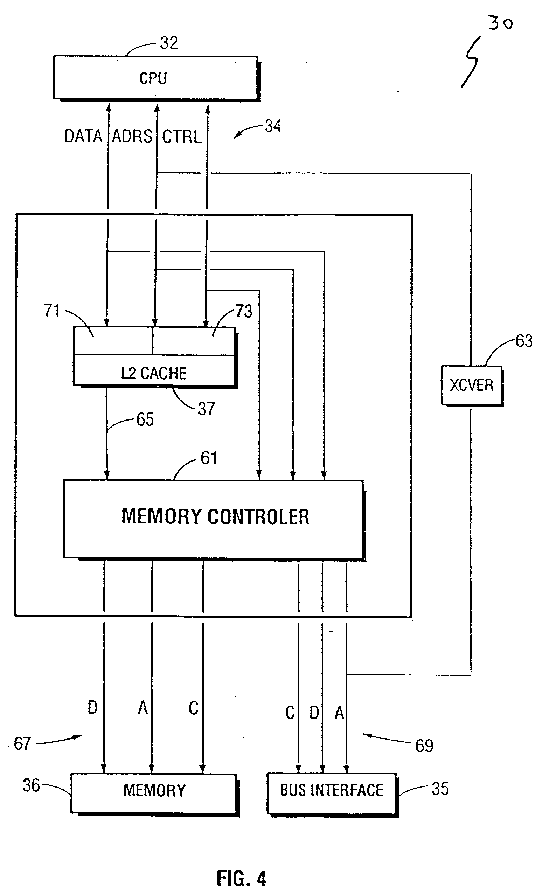

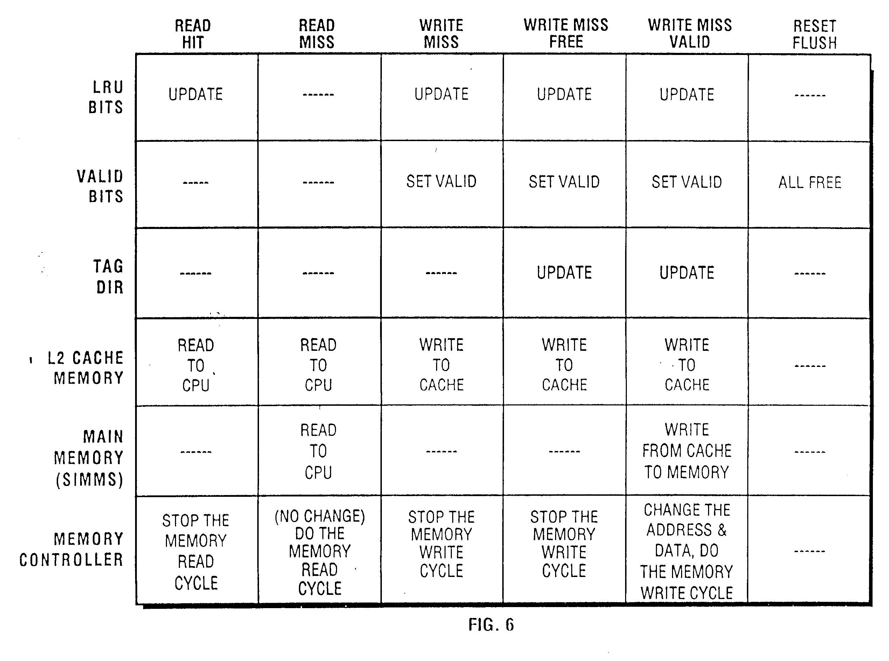

Referring now to Fig. 4, the memory controller unit 30 is shown. The memory controller unit 30 includes a memory controller 61, the L2 cache 37 and a transceiver (XCVER) 63. The L2 cache 37 and the memory controller 61 are connected to the data (DATA), address (ADRS) and control (CTRL) lines of the local bus 34. Data lines 65 connect the L2 cache 37 to the memory controller 61. The memory controller 61 is connected to the memory (SIMMS) 36 by a bus 67 with data (D), address (A) and control (C) lines. In addition, the memory controller 61 is connected to the Bus Interface (BIC) 35 by a bus 69 with data (D), address (A) and control (C) lines. The transceiver 63 bypasses the memory controller 61 and connects the address lines of the local bus 34 to the address lines of the bus 69 that is connected with the BIC 35. The L2 cache includes a controller 71 and memory 73. The controller 71 is a hard wired logic circuit made up of logic gates which implements the operation as shown in Fig. 6 and described hereinafter. Alternatively, the controller 71 can be made up of programmable logic. The memory 73 is made up of Static Random Access Memory (SRAM).

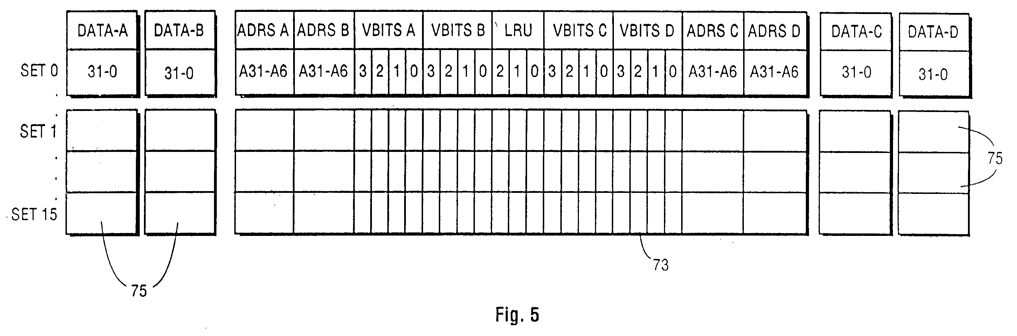

The L2 cache memory 73 is, in the preferred embodiment, a 256 byte - four way associative memory. Fig. 5 illustrates the control and directory organization of the L2 cache memory 73. The data (or instructions) stored in the L2 cache memory is saved in four groups of 32 bits (4 bytes) each. These groups are designated Data-A, Data-B, Data-C and Data-D. Each group has 16 Sets, thus providing a total of 256 bytes. Each data entry 75 (for example Data-A, Set 0) has a corresponding address. The most significant 26 address bits that correspond to each data entry is saved in 4-26 bit groups that are designated Address-A, Address-B, Address-C and Address-D (shown as ADRS A, ADRS B, ADRS C and ADRS D in Fig. 5). Each byte for each data entry 75 has a corresponding valid bit to indicate that the data is valid. The least significant address bits are used as valid bits (shown as VBITS A, VBITS B, VBITS C and VBITS D in Fig. 5).

Three Least Recently Used (LRU) bits are used to indicate which of the four data entries (Data-A, Data-B, Data-C or Data-D) in the set will have its data replaced by new data. When new data is written to the cache, old data is frequently overwritten. The LRU bits provide that when new data is written to one of the four data entries (Data-A, Data-B, Data-C or Data-D) in a Set, then the oldest data among the four data entries will be overwritten, thereby protecting the newest data. The use of LRU algorithms and LRU bits in caches is conventional and known to those skilled in the art.

The operation of the L2 cache 37 will be described. When the CPU 32 (see Fig. 3) reads or writes data to memory, it checks the L1 cache memory 33 first. If the CPU can use the L1 cache memory, then the local bus 34 is not used for the read or write operation. If the CPU 32 cannot use the L1 cache 33, then the local bus 34 is used.

Referring to Figs. 4 and 6, there is shown a chart that illustrates the operation of the L2 cache 37. A general description of the operation will be given first. When the CPU 32 reads data from the local bus 34, the data is provided by either the L2 cache 37 (a read hit) or the SIMMS memory 36 (a read miss). When the CPU 32 writes data to the local bus 34, the data is written to the L2 cache 37. If the address of the data to be written is already in the L2 cache, then the write operation is a write hit. If the address of the data to be written is not in the L2 cache (or does not contain valid data), then the write operation is a write miss. The controller 71 selects a set of data entries for the data to be written to. The controller also uses an LRU algorithm and the LRU bits (see Fig. 5) to select the particular data entry to write the data. The operation is either a write miss-free operation or a write miss-valid operation. A write miss-free operation occurs when the particular LRU specified data entry in a set is free or empty of valid data (as determined from the valid bits). A write miss-valid operation occurs when the particular LRU specified data entry in a set contains old valid data (as determined from the valid bits). The old data in the data entry must first be written to the SIMMS memory 36 before any new data is written to the data entry. This is to prevent the loss of the old data.

The L2 cache operations will now be more specifically described, beginning with a read hit operation. Referring to Figs. 4-6, when a read hit operation occurs the CPU 32 (see Fig. 4) places the address of the data to be read on the address lines (ADRS) of the local bus 34. The L2 cache controller 71 recognizes the address as a read hit by examining the address bits and the valid bits of the cache memory 73 (see Fig. 5), wherein the data in the data entry 75 that has the address is placed onto the data lines (DATA) of the local bus 34 by the controller 71. Thus, the data in the L2 cache 37 is read to the CPU 32 (as shown by the row of Fig. 6 that is entitled L2 Cache Memory). The L2 cache controller 71 signals the memory controller 61 over a control line (CTRL) of the local bus 34 to stop the memory read cycle (as shown by the row of Fig. 6 that is entitled Memory Controller) in order to prevent the SIMMS memory 36 from providing the data to the CPU 32. In addition, during a read hit operation, the LRU bits (shown in Fig. 5) for the set containing the pertinent data entry are updated by the controller 71. For example, if the data entry Data-A, Set 0 contains the data that is read to the CPU, then the LRU bits for Set 0 are updated to indicate that this data entry was the most recently used.

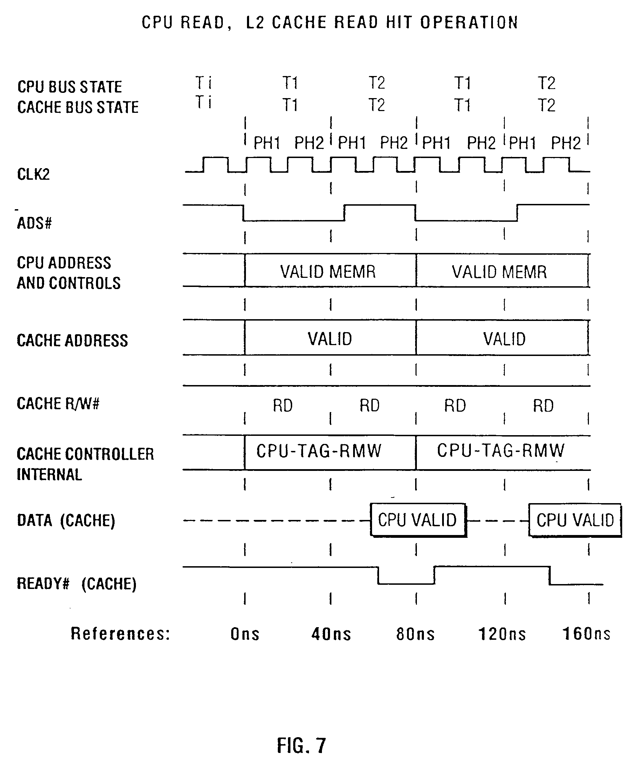

Fig. 7 shows a timing diagram for an L2 cache read hit operation. In the timing diagrams of Figs. 7-10, the leftmost columns are labels for data, address and control lines on the local bus 34 of Fig. 4 as well as internal L2 cache 37 lines. The CLK2, ADS#, CPU ADDRESS AND CONTROLS, DATA and READY# are lines on the local bus 34. A more complete description of the data, address and control lines for an 80386 processor can be found in the Microprocessors reference, already incorporated by reference into this specification. The bus cycle starts when the ADS# line is driven low and the CPU ADDRESS AND CONTROLS lines contain valid information during the T1 bus state of the CLK2 line. When the ADS# line is driven low, the CPU indicates it is ready for a read or write operation. The CACHE ADDRESS, CACHE R/W# and CACHE CONTROLLER INTERNAL are internal lines within the L2 cache 37. The CACHE ADDRESS line indicates that the address is valid and thus contained in the L2 cache 37. The CACHE R/W# line indicates a read operation. The CACHE CONTROLLER INTERNAL line indicates processing of local bus control signals and internal tag addresses by the controller 71 of Fig. 4. The DATA lines of the local bus 34 have valid data available from the L2 cache 37 during the T2 bus state. The controller 71 causes the READY# line from the L2 cache 37 to go low during the T2 bus state, thereby indicating that the L2 cache is ready for the read operation. Thus, during a read hit operation, the L2 cache 37 provides the data to the CPU at the next bus cycle after the CPU's request. This is referred to as 0 wait states, because the CPU did not have to wait to read the requested data. Providing data to the CPU with 0 wait states is the fastest service time possible.

A read miss operation will now be described. During a read miss operation, the L2 cache 37 may contain some of the requested bytes (for example, for a 4 byte data word, the L2 cache could contain 2 bytes) or the L2 cache may contain none of the requested bytes. The CPU 32 (see Fig. 4) places the address of the data to be read on the address lines (ADRS) of the local bus 34.

For a partial read miss, wherein the L2 cache 37 contains only some bytes of data, the L2 cache controller 71 recognizes the address as a partial read hit by examining the address bits and the valid bits of the memory 73 (see Fig. 5). The L2 cache controller 71 causes the requested bytes contained in the L2 cache memory 73 to be placed onto the respective data lines (DATA) of the local bus 34. The L2 cache controller 71 signals the memory controller 61 (using one or more of the control lines (CTRL) of the local bus 34) to provide the remaining data bytes, wherein the memory controller 61 places the remaining data bytes onto the remaining data lines of the local bus 34.

For a full read miss, wherein the L2 cache 37 does not contain any bytes of data, the controller 71 recognizes this and passes control to the memory controller 61, wherein all of the data bytes are read from the main memory 36.

Thus, as shown in Fig. 6, during a read miss operation, data is read to the CPU from both the L2 cache memory (if the L2 cache contains some bytes of the data) and from the main memory (SIMMS). Because data is read from the main memory, the memory controller performs a memory read cycle.

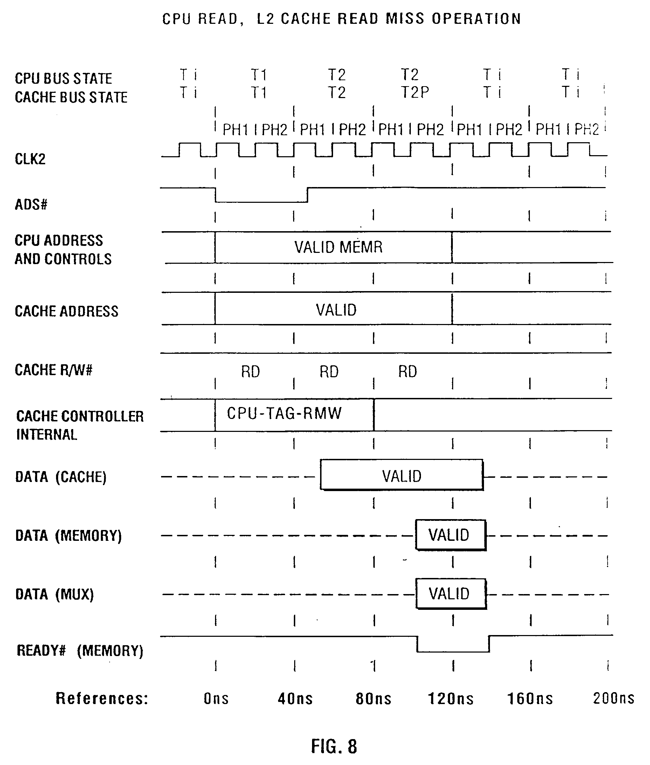

Fig. 8 shows a timing diagram for an L2 cache read miss operation, wherein the L2 cache contains a portion of the requested data (a partial miss). The bus cycle starts at the T1 bus state with the ADS# line going low. The L2 cache 37 provides its data byte or bytes to the data lines of the local bus 34 during the T2 bus cycle, as indicated by the DATA (CACHE) lines. However, the main memory 36 provides its data byte or bytes to the data lines of the local bus 34 at a later time, namely T2P, as indicated by the DATA (MEMORY) lines. The READY# control line goes low during the T2P bus state, indicating that one wait state was encountered. The wait cycle occurred while waiting for the main memory 36 to make the data available on the data bus lines.

Fig. 8 shows the fastest main memory access. Bus cycle T2P will be repeated for the extra wait states. The extra wait states may be incurred if, for example, the main memory must change SIMMS memory modules in order to retrieve the data.

A write hit operation will now be described. During a write hit operation, the CPU 32 (see Fig. 4) places the address of the data to be written on the address lines of the local bus 34. The L2 cache controller 71 recognizes the address as a write hit by examining the address bits and the valid bits of the memory 73 (see Fig. 5), wherein the cache controller 71 places the data that is on the data lines of the local bus 34 into the particular data entry 75 that has the address on the local bus. In addition, the cache controller 71 Sets the valid bits in the address of the designated data entry to valid and updates the LRU bits to indicate that the designated data entry was most recently used. The cache controller 71 signals the memory controller 61 over a control line of the local bus 34 to stop the main memory write cycle. This prevents the data on the local bus from being written to the SIMMS 36. Such a write to the SIMMS would create wait states.

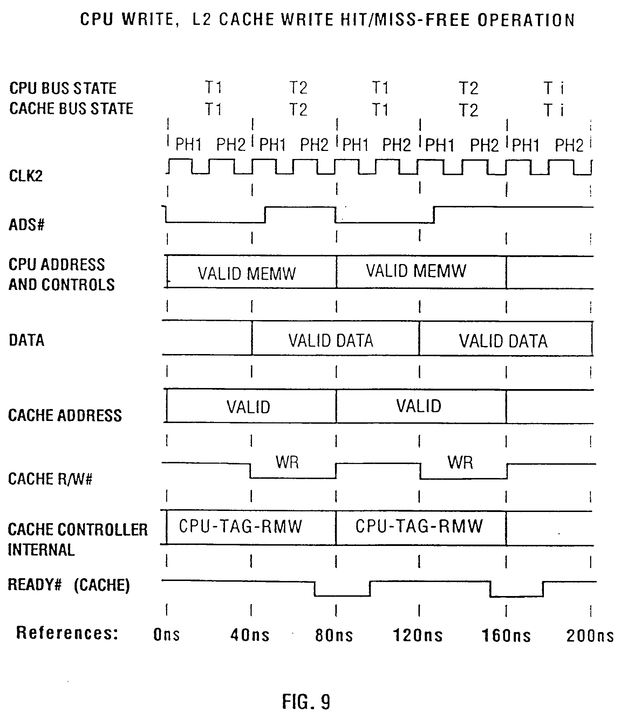

Fig. 9 shows a timing diagram for an L2 cache write hit operation. The CPU 32 puts the data on the DATA lines at the beginning of the T2 bus state. The CACHE R/W# line goes low, indicating a write operation. During the T2 bus state (shown on the CLK2 line), the READY# line goes low, indicating that the L2 cache is ready to receive the data. Thus, the write hit operation is performed with 0 wait states just as in the case of a read hit operation.

The two types of write miss operations will now be described. The term "write miss" is not used by the present invention in the conventional sense, wherein the data is written to the main memory and not to the cache. With the L2 cache of the present invention, the data is always written to the L2 cache, so that there is no "write miss" in the conventional sense. Instead, a write miss to the L2 cache is used to indicate that the address of the data that is to be written by the CPU is not in the L2 cache 37 or else is not valid.

Referring to Fig. 6, a write miss operation will be described. The CPU 32 (see Fig. 4) places the address of the data to be written on the address lines of the local bus 34. The L2 cache controller 71 recognizes that the address is valid, but the data in memory is not valid or not in the L2 cache memory 73 by examining the address bits and the valid bits of the memory 73 (see Fig. 5). The controller 71 utilizes the LRU algorithm and the LRU bits to select a data entry 75 for receiving the data. The controller 71 then determines from the valid bits if the selected data entry is free of data. If so, then a write miss-free operation is initiated. The data is written to the selected data entry 75. The write miss-free operation is the same as the write hit operation, with the exception of updating the tag or address directory for the new data during the write miss-free operation (see Fig. 6). The timing diagram of Fig. 9 applies to a write miss-free operation.

If the selected data entry 75 is not free of valid data (because the data entry contains valid data according to the valid bits) then a write miss-valid operation is initiated. A write miss-valid operation requires creating space in the L2 cache before the new data can be written. Thus, referring to Figs. 4 and 6, the controller 71 writes the old data in the selected data entry 75 to the memory controller 61 over the data lines 65. The controller 71 signals the memory controller 61 over a control line on the local bus 34 to write to the main memory 36 . The memory controller 61 writes the old data to main memory 36 over the bus 67. This creates free space in the selected L2 cache data entry, wherein the cache controller 71 causes the CPU data on the local bus 34 to be written to the selected L2 cache data entry, much as a write miss-free operation. The controller 71 updates the tag directory and the LRU bits for the selected data entry. In addition, the controller 71 Sets the appropriate valid bits to valid for the selected data entry.

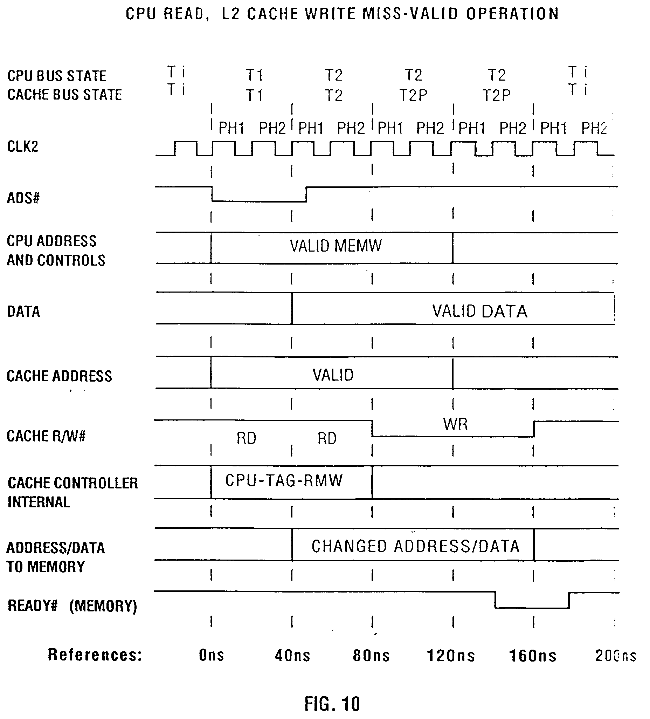

Fig. 10 shows a timing diagram for a write miss-valid operation. The CACHE R/W# line goes low during the first T2P bus state of the CLK2 line, indicating that the old data is written from the L2 cache 37 to main memory 36. The READY# line goes low during the second T2P bus state, which is after two wait states. The two wait states are the number of local bus cycles needed to free the selected L2 cache data entry. This is the fastest available time. Slower times (with additional wait states) may be incurred if the memory controller 61 operates more slowly by, for example, changing to a different SIMMS memory module.

The L2 cache 37 also has a reset flush operation, shown in Fig. 6. Reset flush is used to clear the L2 cache memory, as required, for example at power on of the computer. This is accomplished by setting all of the valid bits free, thereby indicating that no data in the cache memory 73 is valid.

The CPU 32 may conduct partial write operations, wherein a few bytes of a data word are placed on the respective data lines of the local bus 34 (see Fig. 4). The present invention is particularly advantageous when used in conjunction with memory that uses Error Correction Codes (ECC). Prior art systems using ECC perform Read-Modify-Write cycles when performing partial writes to memory. The Read-Modify-Write cycles retrieve the missing data bytes (so as to make up a full data word) from the main memory, thereby producing wait states.

With the L2 cache 37 of the present invention, the partial writes are written to the L2 cache. When a partial write occurs, the controller 71 determines if the operation is to be a write hit, a write miss-free or a write miss-valid and acts accordingly. A partial write is treated the same as a full write. For example, a partial write hit is treated in the same manner as a full write hit discussed above. Thus, if the CPU 32 writes two bytes of a four byte data word, the two bytes are written directly to the cache memory 73 without retrieving the other bytes from the main memory and without changes to the other two bytes in the cache word. When writing data to the main memory, as during a write miss-valid operation, all four bytes of the data word are typically written from the L2 cache. This is because most partial writes to memory are consecutive writes, wherein a first two bytes of a four byte data word are written in a first write operation, followed by the last two bytes of the data word being written in the next write operation. Thus, the main memory typically receives no partial writes. Instead, the L2 cache acts as a filter, effectively minimizing the number of partial writes that reach the main memory.

## Claims

1. A method of transferring data in a computer, said computer comprising a processor (32), a main memory (36) and a local bus (34) connecting said processor (32) to said main memory (36), comprising the steps of:
a) providing a cache memory (37) connected to said local bus (34);
b) writing data on said local bus (34) with said processor (32), said data having an address, said data address being located in said main memory (36) and being absent from said cache memory (37);
c) writing said data on said local bus (34) to said cache memory (37); and
d) preventing said data on said local bus (34) from being written to said main memory (36).

2. The method of claim 1, further comprising the steps of:
a) determining if said data is to be written to a location in said cache memory (37) that is free; and
b) if said location is free, then said step of writing said data on said local bus (34) to said cache memory (37) further comprises the step of writing said data to said free location in said cache memory (37).

3. The method of claim 2 wherein said step of writing said data on said local bus (34) to said cache memory (37) incurs zero wait states.

4. The method of claim 1, further comprising the steps of:
a) determining if said data is to be written to a location in said cache memory (37) that is free; and
b) if said location is not free, then writing data in said location to said main memory (36) before said step of writing said data on said local bus (34) to said cache memory (37) occurs.

5. The method of any claim from 1 to 4, wherein said data comprises plural bytes, wherein:
a) said step of writing data on said local bus (34) with said processor (32), further comprises the step of writing only a partial number of said plural bytes of said data on said local bus (34) with said processor (32); and
b) said step of writing said data on said local bus (34) to said cache memory (37) further comprises the step of writing said partial number of said plural bytes of said data to said cache memory (37).

6. The method of any claim from 1 to 5, wherein said data is first data, and said address is a first address, further comprising the steps of:
a) writing second data with a second address on said local bus (34) with said processor (32), said second address being present in said cache memory (37) and being located in said main memory (36); and
b) writing said second data to said cache memory (37).

7. The method of any claim from 1 to 6, wherein said data is first data, further comprising the steps of:
a) providing on said local bus (34) with said processor (32) a read request for third data with a third address, said third address being present in said cache memory (37) and in said main memory (36); and
b) providing said third data to said local bus (34) and said processor (32) from said cache memory (37).

8. The method of any claim from 1 to 7, wherein said data is first data, further comprising the steps of:
a) providing on said local bus (34) with said processor (32) a read request for fourth data having plural bytes, with at least one byte of said fourth data being located in said cache memory (37) and at least one other byte of said fourth data being located only in said main memory (36); and
b) providing said fourth data to said local bus (34) and said processor (32) by reading said one byte from said cache memory (37) and said other byte from said main memory (36).

9. A method of writing data in a computer, said data comprising a plural number of bytes, said computer comprising a processor (32), memory and a local bus (34) connecting said processor (32) to said memory, said memory comprising cache memory (37) and main memory (36), comprising the steps of:
a) writing a partial number of said bytes of said data on said local bus (34) with said processor (32); and
b) writing said partial number of said bytes on said local bus (34) to said cache memory (37).

10. The method of claim 9, further comprising the steps of:
a) determining if said data is to be written to a location in said cache memory (37) that is free; and
b) if said location in said cache memory (37) is not free, then writing all data in said location to said main memory (36) before said step of writing said partial number of said bytes on said local bus (34) to said cache memory (37) occurs.

11. In a computer, an apparatus for transferring data, said computer comprising a processor (32), a main memory (36) and a local bus (34) connecting said processor (32) to said main memory (36), said processor (32) comprising means for writing data on said local bus (34), characterized by including:
a cache memory (37) connected to said local bus (34), said cache memory (37) operating at a faster speed than said main memory (36);
means for controlling said cache memory (37) and said main memory (36), said means for controlling comprising means (71) for writing said data on said local bus (34) to said cache memory (37) when said data has an address that is absent from said cache memory (37) but present in said main memory (36) and means (61) for preventing said data on said local bus (34) from being written to said main memory (36).

12. The apparatus of claim 11 wherein said means for controlling further comprises:
a) means for determining if said data is to be written to a location in said cache memory (37) that is free; and
b) means for writing said data to said location in said cache memory (37) if said location is free.

13. The apparatus of claim 11 wherein said means for controlling further comprises:
a) means for determining if said data is to be written to a location in said cache memory (37) that is free; and
b) means for writing data in said location to said main memory (36) before writing said data on said local bus (34) to said cache memory (37) if said location is not free.

14. The apparatus of any claim from 11 to 13 wherein said data comprises plural bytes, said processor (32) comprises means for writing only a partial number of said plural bytes of said data on said local bus (34), wherein said means (71) for writing said data on said local bus (34) to said cache memory (37) when said data has an address that is absent from said cache memory (37) further comprises means for writing said partial number of said plural bytes of said data to said cache memory (37).

15. The computer including the apparatus for transferring data according to any claim from 11 to 14.

16. The computer of claim 15 wherein said cache memory (37) is a second level cache memory, said processor (32) further comprising a first level cache memory (33).

17. The Computer of claim 16 wherein said first level cache memory (33) further comprises a write through cache memory.

18. The computer of claim 16 wherein said first level cache memory (33) further comprises a write back cache memory.

19. A memory controller unit (30) for a computer, said computer having a processor (32), a local bus (34) connected to said processor (32), and main memory (36), comprising:
a) a memory controller (61) connected to said local bus (34) and to said main memory (36); and
b) a cache controller (71) with cache memory (73), said cache controller (71) coupled to said local bus (34) and to said memory controller (61), said cache controller (71) comprising means for writing a partial number of bytes of data on said local bus (34) to said cache memory (73), said partial number of said bytes of said data on said local bus (34) being written by said processor (32).
